(19) Europäisches Patentamt

European Patent Office

Office européen des brevets

(11) EP 0 818 708 A1

(12) **EUROPEAN PATENT APPLICATION**

(43) Date of publication:
14.01.1998  Bulletin 1998/03

(51) Int Cl.$^6$: **G03B 21/62**

(21) Application number: 97111852.6

(22) Date of filing: 11.07.1997

(84) Designated Contracting States:
AT BE CH DE DK ES FI FR GB GR IE IT LI LU MC
NL PT SE

(30) Priority: 11.07.1996 JP 181905/96
10.04.1997 JP 91889/97

(71) Applicant: MATSUSHITA ELECTRIC INDUSTRIAL
CO., LTD.
Kadoma-shi, Osaka-fu, 571 (JP)

(72) Inventors:
• Yamaguchi, Hiroshi
  Hirakata-shi, Osaka, 573 (JP)
• Ikeda, Kenichi
  Minou-shi, Osaka, 562 (JP)
• Mitani, Katsuaki
  Ibaraki-shi, Osaka, 567 (JP)

(74) Representative: Grünecker, Kinkeldey,
Stockmair & Schwanhäusser Anwaltssozietät
Maximilianstrasse 58
80538 München (DE)

(54) **Rear projection screen, its manufacturing method, and video display monitor thereof**

(57)    A rear projection screen and its manufacturing method, and video display monitor thereof for preventing moiré by achieving sufficiently large ratio of a pixel pitch on the screen to a lenticular lens pitch. A lenticular lens sheet with the thickness of 0.3 mm or below has a lenticular lens array with a lens pitch Ps of 0.2 m or below on one face and an optical diffusion layer and an optical absorption layer on a flat face at the other side. The optical absorption layer of the lenticular lens sheet is optically bonded to a beam transmitting part with the thickness between 1 mm and 5 mm using a transparent adhesive.

FIG. 1A

EP 0 818 708 A1

## Description

## FIELD OF THE INVENTION

The present invention relates to the field of rear projection screens used for rear projection video display monitors, their manufacturing methods, and rear projection video display monitors thereof.

## BACKGROUND OF THE INVENTION

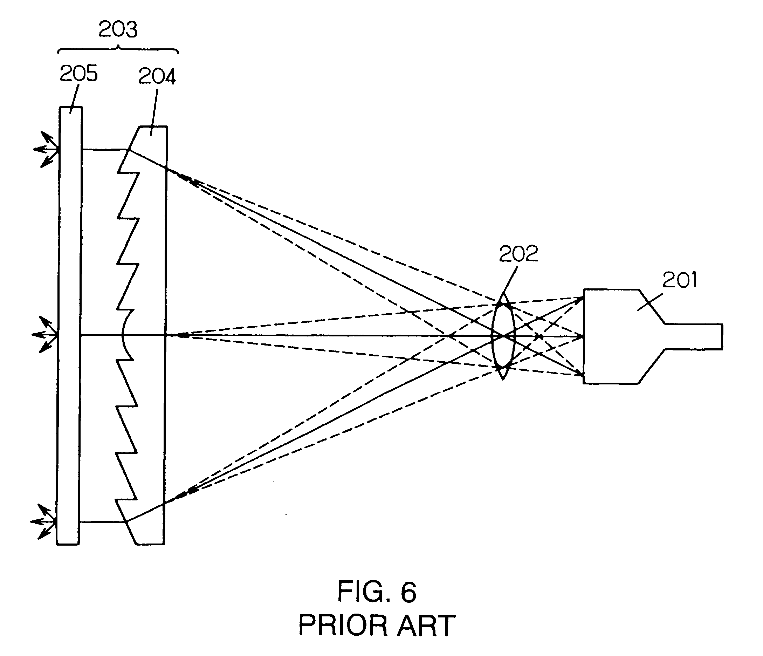

Market demand for development of light and small rear projection video display monitors for displaying images on a large screen is continuing to increase. An example of how the rear projection screen is used in rear projection video display monitors is explained with reference to Fig. 6.

A projection lens 202 behind a rear projection screen 203 magnifies and projects an image of a CRT 201, and creates an image on the rear projection screen 203. Viewers can look at the image from the front of the screen. When the image is seen from a diagonal direction relative to the right front of the screen, the luminance of the image generally falls with increasing angle. This change in luminance is called the visual field characteristic. The rear projection screen 203 comprises a fresnel lens sheet 204 and a lenticular lens sheet 205. The fresnel lens sheet 204 converts the incident projection beam from the projection lens 202 to the rear projection screen 203 into summary parallel rays. The lenticular lens sheet 205 diffuses the incident projection beam converted to parallel rays by the fresnel lens sheet 204. The visual field characteristic of the screen is determined by how the incident projection beam is diffused.

A semi-cylindrical lenticular lens array, where lenses are aligned with their longer side in the vertical direction, is formed on the rear side of the lenticular lens sheet 205. The diffusing material is dispersed inside the lenticular lens sheet 205.

The horizontal viewing angle is mainly determined by refraction of the lenticular lenses, which is relatively broad. Diffusion of the beam by the diffusing material also contributes to widening the viewing angle. The vertical viewing angle is determined only by the diffusion effect of the diffusing material, which is relatively narrow. The viewing angle of the screen is determined according to the viewing environment, and luminance in the viewing area is increased by the effective use of the projection beam.

The wider visual field characteristic of video display monitors is better for watching the screen; however, luminance as seen from the right front falls as the visual field characteristic is widened. Therefore, the optimal visual field characteristic is determined by effectively distributing the beam in the desired necessary directions.

The screen of a video display monitor is generally seen from a variety of horizontal directions. In the vertical direction, however, the screen is seen from a narrower range of angles because audiences are more likely to watch the screen sitting or standing up. Therefore, vertical visual field characteristics may not desirably be as wide. The visual field characteristic of the rear projection screen is designed to satisfy usage purposes. Accordingly, the beam diffusing characteristic of the rear projection screen preferably requires anisotropic light diffusion characteristics, which show broader diffusion in the horizontal direction and narrower diffusion in the vertical direction.

The lenticular lens sheet 205 has anisotropic light diffusion characteristics. Specifically, the light diffusion characteristic show a higher value in the horizontal direction due to the effect of the lenticular lenses whose longer side is aligned in the vertical direction, and a relatively smaller value in the vertical direction because the light is vertically diffused only by the effect of light diffusing material dispersed inside.

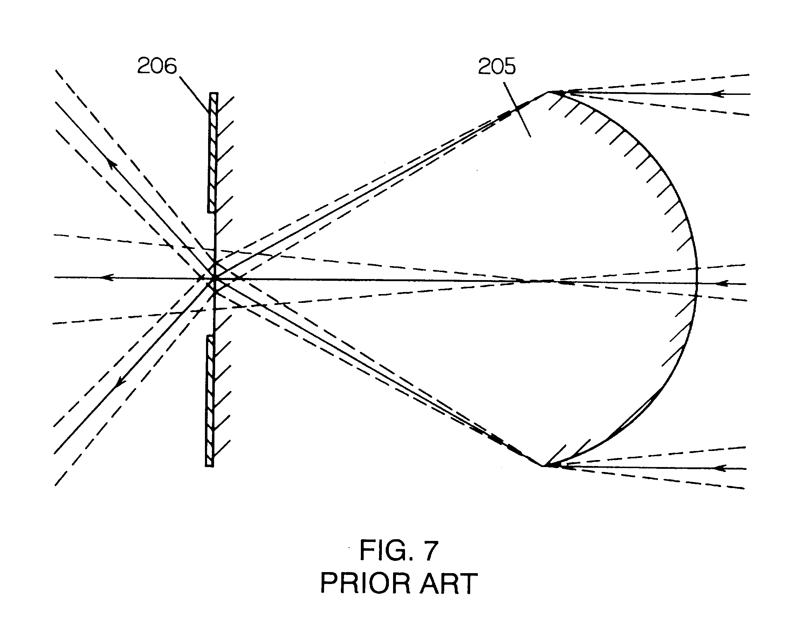

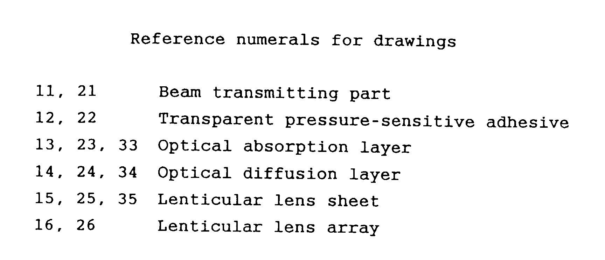

The effect of the lenticular lenses of the lenticular lens sheet 205 is explained with reference to Fig. 7. It should be noted that the light diffusing material generally dispersed in the lens is not illustrated here. Fig. 7 therefore shows light diffusion in the horizontal direction only by refraction of the lenticular lens.

The solid line in Fig. 7 indicates the beam track of the main beam passing through the pupil center of the projection lens 202. A broken line indicates the beam passing the periphery of the projection lens 202.

As shown in Fig. 7, the lenticular lens widely diffuses (to wide angle) the incident beam which has entered the lenticular lens with sharp directivity (almost parallel) so that the image can be watched over a broader visual field.

The thickness of the lenticular lens sheet 205 is almost equivalent to the focal length of the lenticular lens. The projection beam passes through a specified area on the lenticular lens sheet 205, but does not pass through other areas. Using the characteristic whereby the beam does not pass through a certain area (beam non-transmitting area), black stripes 206, made of light-absorbing material, are generally formed on the beam non-transmitting area in the beam exiting plane of the lenticular lens sheet 206.

By forming the black stripes 206 on the lenticular lens sheet 205, reflection of external light can be reduced without loss in the projection beam, thereby greatly improving image contrast.

However, as is apparent from the above explanation, the thickness of the lenticular lens sheet 205 is ideally almost equivalent to the focal length of the lenticular lens element. To achieve an appropriate horizontal viewing angle ($\pm 30°$ to 45° which is up to the angle when luminance is reduced by half), the thickness will be 1.2 to 1.5 times that of the lenticular lens pitch.

Popular screen sizes for these types of display monitors such as rear projection televisions are 35" to 70", and the lenticular lens pitch is 0.5 to 1.0 mm.

A smaller lenticular lens pitch is better for preventing deterioration in the resolving power of the rear projection screen. However, the abovementioned lenticular lens pitch of 0.5 to 1.0 mm satisfies the display quality in practical use for rear projection video display monitors having a CRT as an image source.

On the other hand, as mentioned above, black stripes may require to be formed in a location which maintains the right positional relation with the lenticular lenses. If the black stripes are shifted, the beam which is supposed to pass through is absorbed, resulting in reduction of light efficiency.

A general method for forming the black stripes is to mold a concave and convex section on the emitting face corresponding to the incident plane of the lenticular lens at the same time when molding the lenticular lens sheet, and use the concave and convex section for the black stripes. This method assures the positional accuracy of the commonly used lenticular lens pitches of 0.5 mm to 1.0 mm. Due to limits in machining accuracy, however, the relative positional error in the accuracy of matching the mold for forming the shape of lenticular lens and the mold for forming the concave and convex increases if the lenticular lens pitch is further narrowed. It is difficult to make a finer lenticular lens pitch with this method.

Japanese Laid-open Patent H8-254756 discloses a method for accurately forming the black stripes without using molds. The prior art discloses a method for forming the convex and concave shapes or a mask by exposing light-sensitive resin selectively using the light condensing function of the lenticular lens.

Since rear projection video display monitors having a liquid crystal panel as a video source have recently been developed, demands for finer lenticular lens pitch have increased. Rear projection video display monitors having a liquid crystal panel as a video source may cause moire due to pixel alignment of liquid crystal and lens alignment of the lenticular lens. Moiré has not occurred in rear projection video display monitors having a CRT as an image source because the periodicity of scanning lines of the CRT and the periodicity of the lenticular lens spatially cross at right angles.

Moiré caused by the pixel alignment of liquid crystals and the lens alignment of the lenticular lens is related to the pitch ratio $Rp = Pg/Ps$; where $Pg$ is the pixel pitch of liquid crystal and $Ps$ is the lenticular lens pitch of the lenticular lens sheet 205. To make moire inconspicuous by minimizing the moire pitch, the pitch ratio $Rp$ should ideally be close to a multiple of a half integer. The larger the pitch ratio $Rp$, the more the moire intensity is reduced.

Allowance for the pitch ratio $Rp$ for practical use cannot be generalized because it is also related to the amount of diffusing material mixed in. In our examination, the pitch ratio $Rp$ below 5 preferably requires optimization to a multiple of a half integer as mentioned above, preferably around 4.5 with a minimum of 2.5. When the $Rp$ is above 5.5, moire intensity is very low, and may not require optimization to a multiple of a half integer.

For example, if an image of popular VGA (Video Graphics Array) specification (640 horizontal pixels and 480 vertical pixels) is displayed on the 40 inch screen of a rear projection video display monitor with a liquid crystal video source, the pixel pitch $Pg$ on the rear projection screen is about 1.3 mm. Accordingly, the maximum applicable lenticular pitch $Ps$ is 1/2.5 of the pixel pitch, which is about 0.5 mm. Existing lenticular lens sheets therefore satisfy the 0.5 mm lenticular pitch $Ps$.

To ensure that a lenticular lens sheet with black stripes provides a specified viewing angle, the thickness of the lenticular lens sheet is ideally within 1.5 times the lenticular pitch, which, in this case, is below 0.75 mm.

A lenticular lens sheet with a thickness below 0.75 mm causes a new problem in that it is very easily bent, making it difficult to hold in position.

In addition, a lenticular lens sheet of 0.5 mm pitch is applicable only for the abovementioned number of pixels and screen size. If the screen size differs slightly, even though the number of pixels is the same, a high degree of moiré appears, making the display monitor unacceptable for use.

The prior art has diffusing material inside the lenticular lens sheet. In this case, the projection beam is diffused by the diffusion effect of the diffusing material before reaching the black stripes, thus causing loss in the beam. Japanese Laid-open Patent No. H8-254756 discloses a method for forming the black stripes by making convex and concave sections or a mask by exposing light-sensitive resin selectively using the light condensing function of the lenticular lens.

With this method, if diffusing material is dispersed inside the lenticular lens sheet, the irradiated beam diffuses by the diffusion effect of the diffusing material, and causes slight changes or non-uniformity in exposure conditions such as the intensity of irradiation and exposure time. Consequently, it is difficult to form precise black stripes in this way due to the occurrence of changes and non-uniformity during their formation.

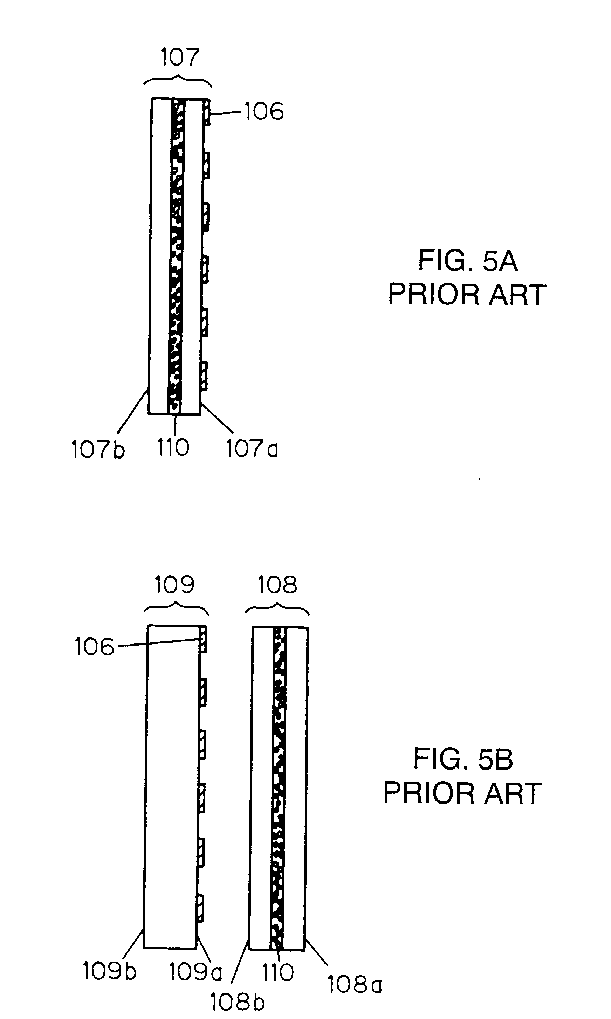

To avoid these problems, as shown in Fig. 5B, one way is to make the lenticular lens sheet only with transparent material and provide a diffuser 108 on the viewing face of the lenticular lens sheet.

However, this method cannot sufficiently reduce diffuse reflection of external light, resulting in lower image contrast.

The basic concept is explained with reference to flat boards in Figs. 5A and 5B.

Fig. 5A shows a transparent board with black stripes having an optical diffusion layer inside. Fig. 5B illustrates a transparent board with black stripes and a diffuser at its front. A diffuser with black stripes 107 is a transparent diffuser which comprises an optical diffusion layer 110 at its center and black stripes on its viewing face. A diffuser 108 is a transparent diffuser which comprises an optical diffusion layer 110 at its center. A transparent board with black stripes 109 has black stripes 106 on a transparent board. The width of the black stripes 106 is half the periodicity of the black stripes 106.

In the above example, the transparent material shows a refractive index of 1.5 and reflectance of 4% regardless of incident angle for convenience, and no optical absorption. Both sides of the transparent material are mirror finished. The black stripes also have reflectance of 4%, and the rest is absorbed, giving zero transmittance. Therefore, a black stripe face 107a and 109 a where black stripes are formed over 50% of its area has 4% reflectance, 48% transmittance, and 48% absorption. Other faces without black stripes have 4% reflectance, 96% transmittance, and 0% absorption.

Based on the above assumption, the diffuse reflection component in two examples in Figs 5A and 5B is discussed below. Under examination, the intensity of incident beam is considered as 1, and any component which reflects multiple times is ignored because the amount is very small.

In Fig. 5A, it is assumed that external light with intensity of 1 enters the black stripe face 107a at the screen viewing side of the diffuser with black stripes 107. Of the incident light, 4% is reflected, 48% is absorbed, and 48% is transmitted and diffused by the optical diffusion layer 110. Of the that 48% which has been diffused, 4% is reflected by a face 107b. Out of that 4%, 48% is again transmitted through the black stripe face 107a and returns to the viewing direction. Component which returns to the viewing direction in this case is as follows.

1) The component which transmits through the black stripe face 107a, reflects on the face 107b, and transmits through the face 107a again is

$$0.04 \times (0.48)^2 = 0.009.$$

This is just 0.9% of incident external light.

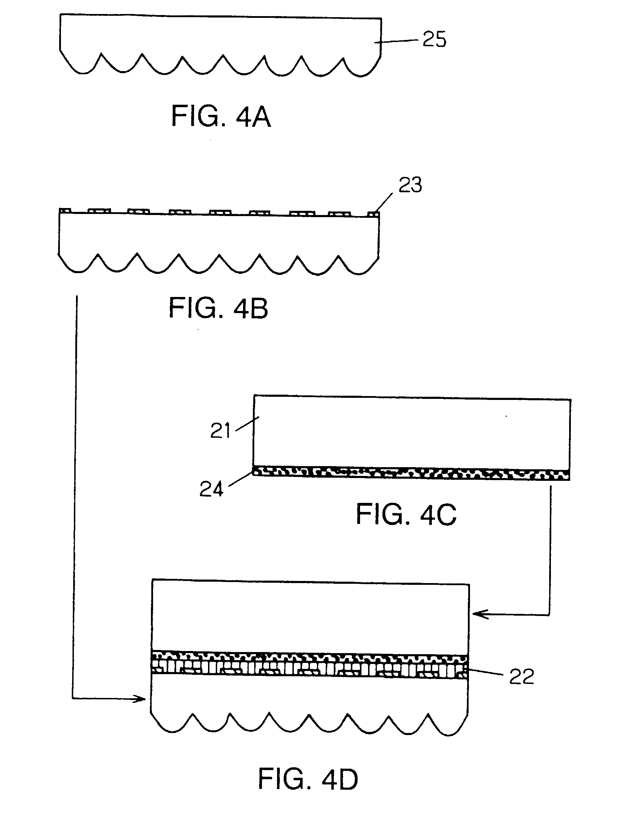

In the case of Fig. 5B, 4% of the external light which enters from a face 108a at the screen viewing side of the diffuser 108 is reflected and 96% is transmitted through the face 108a and diffused by the optical diffusion layer 110. Of that 96% which has been diffused by the optical diffusion layer 110, the component which returns to the viewing direction is as follows:

1) The component reflected on a face 108b and transmitted through the face 108a is

$$0.04 \times 0.96 = 0.038.$$

2) The component transmitted through the face 108b, reflected on a face 109a, and transmitted through the face 108b and the face 108a is

$$0.04 \times (0.96)^3 = 0.035.$$

3) The component transmitted through the faces 108b and 109a, reflected on a face 109b, and transmitted through the faces 109a, 108b, and 108a is

$$0.04 \times (0.96)^3 \times (0.48)^2 = 0.008.$$

In total,

$$0.96 \times (0.038 + 0.035 + 0.008) = 0.078.$$

This proves that the example in Fig. 5B reflects about 9 times more that the example in Fig. 5A. About 8% of the external light is reflected to the screen viewing side as diffusion light, resulting in deterioration of image contrast.

Consequently, the method which provides the diffuser in front of the lenticular lens sheet lowers image contrast.

## SUMMARY OF THE INVENTION

A rear projection screen comprises a lenticular lens sheet having a lenticular lens array at one side and a flat face at the other side, and a beam transmitting part having a flat face on both sides. An optical absorption layer, optical diffusion layer, and optically bonded layer are formed between the flat face of the lenticular lens sheet and one face of the beam transmitting part.

In the rear projection screen of the present invention and its manufacturing method, the screen comprises a thin lenticular lens sheet and a thick beam transmitting part. The optical absorption layer and optical diffusion layer are formed between the lenticular lens sheet and the beam transmitting part, and they are optically bonded so as to prevent loss of beam at an interface. With the above integrated configuration, the present invention improves mechanical rigidity, and at the same time prevents the loss of beam and the occurrence of flare by reflection on a bonded face.

The rear projection video display monitor of the present invention comprises a liquid crystal panel of the present invention and satisfies demands for finer lenticular lens pitch.

## BRIEF DESCRIPTION OF THE DRAWINGS

Fig. 1A is a horizontal section view of a rear projection screen in accordance with a first exemplary embodiment of the present invention.

Fig. 1B illustrates a rear projection video display monitor in accordance with the present invention.

Fig. 2 is a horizontal section view of a rear projection screen in accordance with a second exemplary embodiment of the present invention.

Fig. 3 is a section view of a lenticular lens sheet of a rear projection screen in accordance with a third exemplary embodiment of the present invention.

Figs. 4A-D illustrate an exemplary manufacturing processes for a rear projection screen in accordance with a fourth exemplary embodiment of the present invention.

Figs. 5A-B are sectional views of flat boards for explaining diffuse reflection component in external light in accordance with the prior art.

Fig. 6 is a basic structure of a projection video display monitor in accordance with the prior art.

Fig. 7 is a section view of a lenticular lens sheet for explaining the effect of the lenticular lens sheet in accordance with the prior art.

## DESCRIPTION OF THE PREFERRED EMBODIMENTS

First exemplary embodiment

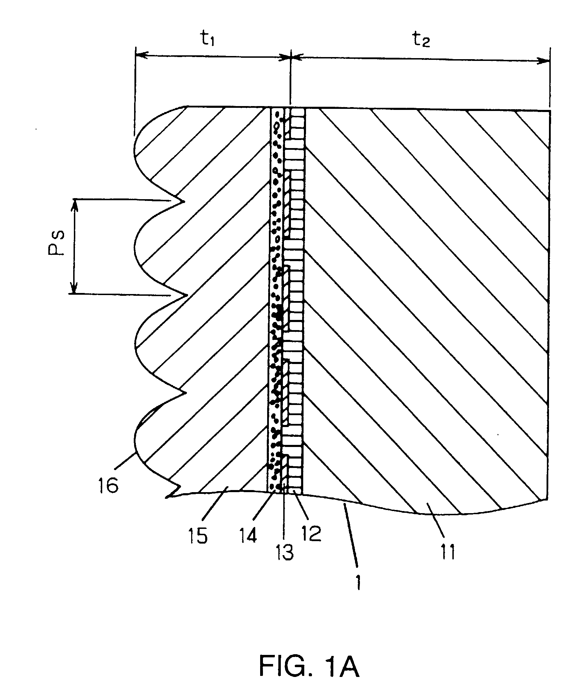

Fig. 1A is a horizontal section view of a rear projection screen 1 in a first exemplary embodiment of the present invention. A lenticular lens sheet 15 and a beam transmitting part 11 are adhered using a transparent pressure-sensitive adhesive 12. The rear projection screen comprises a fresnel lens sheet and a lenticular lens sheet as explained using Fig. 6. However, the fresnel lens sheet is excluded from the rear projection screen in the following explanation.

In a projection video display monitor, an image is projected from the lenticular lens sheet 15, and viewers watch the image from the beam transmitting part 11.

A lenticular lens array 16 consisting of lenticular lenses is formed on one side of the lenticular lens sheet 15. Lenticular lenses have a semi-cylindrical shape, and a large number of them are aligned in array. The longer side of the semi-cylindrical lenses are aligned vertically for use.

An optical diffusion layer 14 is formed over the entire face of the other side of the lenticular lens sheet 15. Diffusing material which diffuses light isotropically is dispersed in the optical diffusion layer 14.

An optical absorption layer 13 is formed on the optical diffusion layer 14. Since the optical absorption layer 13 is formed on a beam non-transmitting area created as a result of the refraction effect of the lenticular lens sheet 15, it does not cause any loss in the projection beam. The optical absorption layer 13 is black and therefore called black stripes.

The lenticular lens array 16, as already explained using Fig. 7, refracts and diffuses the incident beam which enters horizontally. The rear projection screen of the present invention employs the lenticular lenses with pitch Ps of 0.2 mm or below so as to satisfy requirements for reducing moire as previously described. The focal length of the lenticular lens is 1.2 to 1.5 times the pitch Ps. This enables the rear projection screen of the present invention to assure an appropriate horizontal viewing field on the video display screen.

The lenticular lens array 16 diffuses the beam over a broader area by refracting the incident beam horizontally and diffusing it. The optical diffusion layer 14 further diffuses the beam in other directions than the diffusing directions of the lenticular lens to prevent a sharp drop in luminance at some viewing angles. The optical diffusion layer 14 also diffuses the beam in the vertical direction, which the lenticular lens array 16 does not refract, thereby giving a relatively narrow viewing field in the vertical direction.

The thickness $t_1$ of the lenticular lens sheet 15 is set equivalent to the aforementioned focal length. This makes the projection beam converge in a limited area (face) on the other face, and exits from that limited area (face).

In other words, the projection beam passes the other face through the limited area (face), and the beam does not pass through other area (face). The area which the beam does not pass through is called a beam non-transmitting area, and the optical absorption layer 13 is provided thereon. The optical absorption layer 13 has black stripes for preventing a loss in the projection beam. With provision of this optical absorption layer 13, reflection of external light can be reduced without loss in the projection beam, thereby improving the contrast of video image.

The thickness $t_1$ of the lenticular lens sheet 15 as configured above is 1.2 to 1.5 times that of the lenticular lens pitch Ps = 0.20 mm, as explained above, which is 0.3 mm at the maximum. Consequently, the lenticular lens sheet 15 is too thin to be independently mounted as a rear projection screen on projection video display monitors.

The mechanical strength of the lenticular lens sheet 15 can be improved by adhering it to the thick beam transmitting part 11. However, adhesion of the lenticular lens sheet 15 and the beam transmitting part 11 may be required to satisfy optical bonding conditions to prevent flare and loss of beam due to reflection at the interface. The lenticular lens sheet 15 with a thickness $t_1$ of 0.3 mm or less is adhered to the beam transmitting part 11 with a thickness $t_2$ of between 1 mm and 5 mm using the transparent pressure-sensitive adhesive 12 which satisfies conditions for optically bonding two materials without causing reflections at the interface. For example, if the beam transmitting part 11 and the lenticular lens sheet 15 are made of acrylic resin, the light diffusion layer 14 and the light absorption layer 13 are made of resin mainly composed of acrylic resin, and an acrylic transparent pressure-sensitive adhesive is used as the transparent adhesive 12, the refractive index of all parts are nearly equivalent. Therefore, the rear projection screen using the above materials are optically bonded, and loss of beam and flare due to reflection do not occur at the interface. Thus, optical bonding conditions can be fulfilled by selecting materials with matching refractive indices.

Since the screen is mechanically strengthened, the present invention can be easily and independently mounted as a rear projection screen on projection video display monitors.

If the thickness $t_2$ of the beam transmitting part 11 is 1 mm or less, its strength is insufficient. If it is over 5 mm, it is too heavy. In both cases, there will be difficulty in handling the beam transmitting part 11.

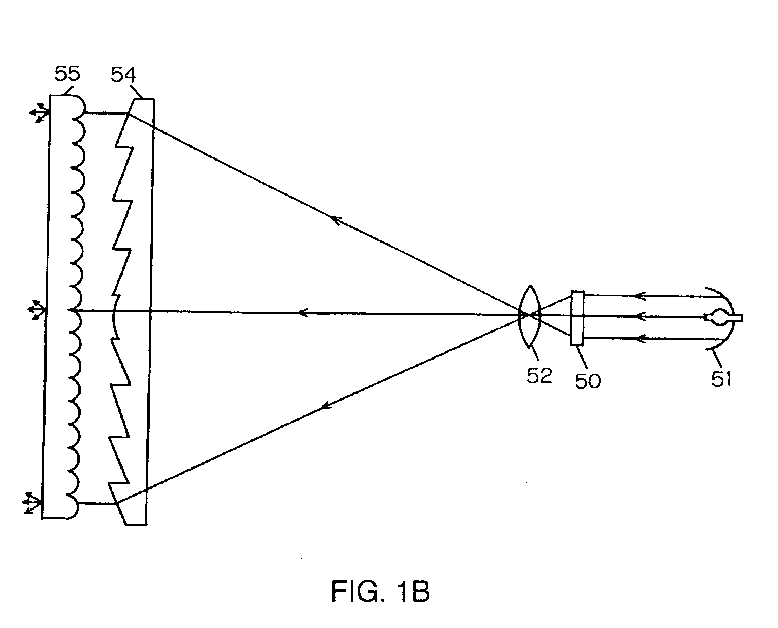

Figure 1B illustrates a video display monitor in accordance with the present invention. A video source 50, such as a liquid crystal panel is shown. An image of liquid crystal panel 50 illuminated by a lamp 51 is magnified and projected through a projection lens 52, and converted into parallel rays through a fresnel lens sheet 54 and creates an image on the rear projection screen 55.

Second exemplary embodiment

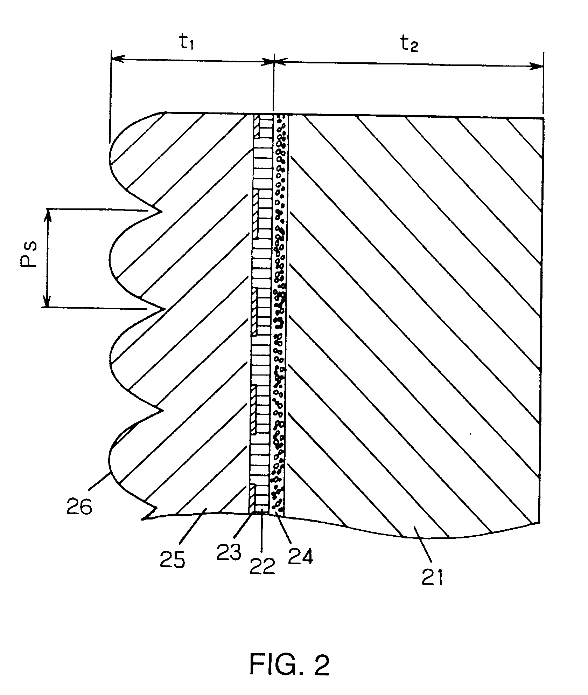

Fig. 2 is a horizontal section view in a second exemplary embodiment of a rear projection screen of the present invention. Black stripes, which is an optical absorption layer 23, are provided on an area where beam does not pass through in a beam exiting plane of a lenticular lens sheet 25, that is a beam non-transmitting area.

An optical diffusion layer 24 with a diffusing material dispersed therein for diffusing beam isotropically, is formed over the entire face of one side of a beam transmitting part 21.

The optical absorption layer 23 consisting of the black stripes and the optical diffusion layer 24 containing diffusing material are optically bonded with a transparent pressure-sensitive adhesive 22 so as to prevent reflection at the interface, and therefore the lenticular lens sheet 25 and the beam transmitting part 21 are integrated. The optical bonding material is also optically bonded to the diffusion layer. Thus, both the absorption layers 23 and the portions of adhesive 22 between absorption layers 23 are optically bonded to the diffusion layer.

In the above configuration, a lenticular lens array 26 refracts and diffuses incident beam entering horizontally. Since the optical absorption layer 23 is formed on the beam non-transmitting area which is created as a result of refraction effect by the lenticular lens sheet 25, loss in the projection beam can be prevented and reflection of external light can be suppressed. Since the diffusing material for diffusing the beam isotropically is dispersed in the optical diffusion layer 24, projection beam is scattered.

External light diffused by the optical diffusion layer 24 which reaches the black stripes is 100% absorbed without being reflected on black stripe sections. Component which reaches opening sections is 100% passed through. This reduces diffuse reflection component of external light.

In other preferred mode, the optical diffusion layer 24 and the beam transmitting part 21 may preferably be integrated by double-layer extrusion, and the lenticular lens sheet 25 comprising the optical absorption layer 23 is optically bonded using the transparent pressure-sensitive adhesive 22.

In the second exemplary embodiment, the optical absorption layer 23 and the optical diffusion layer 24 are bonded with a pressure-sensitive adhesive. The same effect can be expected with the use of a transparent adhesive.

The rear projection screen in the first and second exemplary embodiments of the present invention enables to reduce the pitch Ps of the lenticular lens to 0.2 mm or below. Since a pixel pitch Pg of rear projection video display monitors with the screen size above 35" employing a VGA liquid crystal panel is about 1.3 mm, the pitch ratio Pg/Ps is 5.5 times or above. Consequently, moiré disturbance can be reduced to within allowance of practical use. This solves the first problem of the prior art.

Secondly, mechanical strength of the lenticular lens sheet with the thickness of 0.3 mm or below having black stripes on its focal face and the lenticular lens pitch Ps of 0.2 mm or below can be reinforced without loosing optical performance such as loss in beam and flare due to reflection by optically bonding the black stripe face of the lenticular lens sheet to the beam transmitting part with the thickness of 1 mm or above.

Thirdly, the rear projection screen with better effect for reducing reflection of external light can be provided without reducing optical performance such as loss in beam and flare due to reflection and optical attenuation by optically bonding the lenticular lens sheet and the beam transmitting part.

The optical diffusion layer 24 is formed over the entire face of one side of the optical transmitting part 21 in the exemplary embodiment. In other preferred mode, a diffusing material is dispersed in the entire lens sheet without forming the optical diffusion layer 24.

An optical absorbing material can also be dispersed in the beam transmitting part 21. In this case, transmittance may reduce but the image contrast will improve because reduction in reflection of external light by the beam transmitting part 21 exceeds the loss of projection beam.

Further values can be added to the rear projection screen of the present invention by applying well-known processing such as reflection prevention, anti-static treatment, and surface hardening to the surface of the beam transmitting part 21.

With the use of the rear projection screen as configured above, rear projection video display monitors having a liquid crystal panel as a video source can improve the contrast characteristic without causing deterioration of picture quality by moire in a range of screen sizes without being limited to a certain size. In addition the present invention offers an easy-to-handle rear projection screen. Thus, this embodiment can also be used in the rear projection video display monitor shown in Fig. 1B. The pitch ratio Pg/Ps is 5.5 times or above in these embodiments. Consequently, moire disturbance can be reduced to within allowance of practical use. The liquid crystal panel 50 can be replaced by video display device such as CRT, plasma display as in Fig. 6.

Third exemplary embodiment

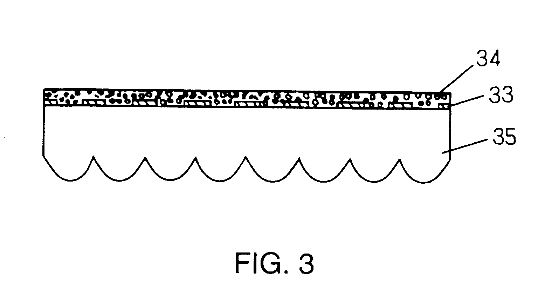

Fig. 3 is a lenticular lens sheet in a third exemplary embodiment of the present invention.

Black stripes formed on a flat face of a lenticular lens sheet 35 are used as an optical absorption layer 33. On top of the optical absorption layer 33, an optical diffusion layer 34 with a diffusing material dispersed therein for diffusing beam isotropically is directly formed by means such as printing and spraying. The surface of the optical diffusion layer 34 is smoothed by printing multiple times or by optimizing the viscosity of spraying material.

With this configuration as shown in Fig. 3, a smooth face of the lenticular lens sheet 35 comprising the optical diffusion layer 34 and the optical absorption layer 33 is optically bonded to a smooth face of a beam transmitting part. The flat contact faces thus facilitate creation of an optically bonded layer without generating bubbles in a transparent adhesive.

This configuration may also be used in a video display monitor.

Fourth exemplary embodiment

Figs. 4A, 4B, 4C, and 4D illustrate an example of how a lenticular lens sheet of the rear projection screen of the present invention is manufactured.

First, a mold which is engraved to a reverse shape of a lenticular lens array is filled with uncured acrylic ultraviolet curing resin. The acrylic ultraviolet curing resin in the mold is covered with a polyester film for preventing generation of bubbles on the surface, and the ultraviolet ray is irradiated over the polyester film to cure ultraviolet curing resin to create a film of a lenticular lens sheet 25 as shown in Fig. 4A. The thickness of the polyester film is determined in a way to make the total thickness of the lenticular lens and the polyester film nearly the same as the focal length of the lenticular lens.

A lift-off method is employed for forming an optical absorption layer 23 on a film of the lenticular lens sheet 25.

After applying an ultraviolet curing resin on a flat face of the film of the lenticular lens sheet 25, ultraviolet ray parallel to an optical axis of the lenticular lens is radiated from the side of the lenticular lens. By irradiating ultraviolet ray, the ultraviolet curing resin at a part where beam passes through when it is used as a screen is cured. Uncured ultraviolet curing resin at a part where the beam does not pass through, which becomes a beam non-transmitting area, is removed in a developing process. Accordingly, the lenticular lens sheet having stripes of the ultraviolet curing resin on the beam transmitting area is formed.

Secondly, a black ink is printed or sprayed on the entire flat face, and dried. Using a chemical which dissolves the ultraviolet ray curing resin but does not dissolve the black ink, the black ink applied to the beam transmitting area is removed together with the ultraviolet curing resin which was on the beam transmitting area. Consequently, the black ink remains only on the beam non-transmitting area, which forms black stripes as shown in Fig. 4B. Thus, a film of lenticular lens sheet having an optical absorption layer 23 is made.

On the other hand, a beam transmitting part 21 having an optical diffusion layer 24 is made by the double-layer extrusion as shown in Fig. 4C. Materials and their characteristics are explained below. PMMA (acrylic resin) is used as a material for the beam transmitting part 21, which becomes a base board. The optical dispersion layer 24 consists of PMMA as dispersion medium, and MS (polymer of acryl and styrene) beads is spread thereto. Beam diffuses by refraction of beam at the beads interface caused by the difference in refractive index of PMMA and that of MS of which beads are made. Target diffusion characteristics can be achieved by adjusting refractive index of MS beads, beads diameter, and the thickness of a diffusion layer. Refraction index of PMMA, the diffusion medium, is 1.49, whereas that of MS, the beads material, is 1.52 to 1.55. If the beads particle diameter is set between 3 $\mu$m and 20 $\mu$m and diffusion concentration is set to 5 to 20% in volume concentration, the thickness of the optical diffusion layer will be about 100 $\mu$m for realizing required vertical viewing field characteristic on the screen.

Next, how the beam transmitting part 21 (Fig. 4C) having the optical diffusion layer 24, which is made by the double-layer extrusion, and a film of the lenticular lens sheet (Fig. 4B) having the black stripes 23 are optically bonded using a transparent pressure-sensitive adhesive 22 is explained with reference to Fig. 4D.

Required thickness of the beam transmitting part 21 after bonding depends on the screen size. However, it is preferably set to a range of 1 mm to 5 mm for assuring sufficient mechanical strength as a screen after bonding and avoiding too heavy screen which causes difficulty in handling. The lenticular lens sheet with black stripes and the beam transmitting part 21 are bonded between the face of black stripes and the face of light diffusion layer using the transparent acrylic pressure-sensitive adhesive 22 (refractive index: 1.49).

As explained above, each component of the screen, that is, the lenticular lens sheet 25, diffusion medium of the optical diffusion layer 24, and the beam transmitting part 21 are made of or mainly containing acrylic resin, and therefore refractive index is about the same as that of the transparent acrylic pressure-sensitive adhesive 22 which is used for bonding each component. Thus, optical bonding conditions are satisfied and beam does not reflect at the interface.

With the use of above manufacturing method, the optical diffusion layer does not disturb formation of black stripes. Thus, the black stripes can also be formed accurately in an inexpensive way. In addition, optical bonding of the optical diffusion layer and the black stripes eliminate reflection at the interface, and thereby avoiding reduction of image contrast by reflection. In addition, the black stripes absorb beam so as to realize high image contrast.

Furthermore, the lenticular lens sheet is mechanically strengthened by optically bonding it to a relatively thick base board. Thus, the rear projection screen of the present invention facilitates mounting of a film of the lenticular lens sheet onto projection video display monitors, which was then difficult to mount independently.

In the above manufacturing method, the optical diffusion layer 24 and the beam transmitting part 21 are manufactured by the double-layer extrusion. This can also be realized by optically bonding between a film of the optical diffusion layer, a film of the lenticular lens sheet with black stripes, and the beam transmitting part 21 which is a transparent layer, using the transparent acrylic pressure-sensitive adhesive 22 (refractive index 1.49).

In other preferred mode, the acrylic transparent pressure-sensitive adhesive 22 is applied to optically bond a film of the optical diffusion layer and a film of the lenticular lens sheet without black stripes. Black stripes are formed thereon using the above method. The face with black stripes and the beam transmitting part 21 are then optically bonded using the transparent pressure-sensitive material 22.

Accordingly, the present invention prevents occurrence of deterioration in video images due to moiré although a liquid crystal panel is used as a video source in the rear projection video display monitor by achieving the lenticular lens array pitch of 0.2 mm or below. In addition, the present invention facilitates handling of the screen without degrading optical characteristics by optically bonding the lenticular lens sheet to the beam transmitting part with the thickness of 1 mm to 5 mm.

It will also be appreciated that the rear projection screen and its manufacturing method of the present invention can be realized in other ways. The exemplary embodiments described herein are therefore illustrative and not restrictive. The scope of the invention being indicated by the appended claims and all modifications which come within the true spirit of the claims are intended to be embraced therein.

**Claims**

1. A rear projection screen comprising:

   a lenticular lens sheet having a lenticular lens array at one side and a flat face on the other side;
   a beam transmitting part having flat faces on both sides;
   an optical absorption layer; an optical diffusion layer; and an optically bonded layer provided between the flat face of said lenticular lens sheet and one face of said beam transmitting part.

2. A rear projection screen comprising:

   a lenticular lens sheet having a lenticular lens array at one side and a flat face on the other side;
   an optical absorption layer adjacent to the flat face of said lenticular lens sheet;
   an optically bonded layer adjacent to said optical absorption layer;
   an optical diffusion layer adjacent to said optically bonded layer; and
   a beam transmitting part adjacent to said optical diffusion layer having flat faces on both sides;
   whereas a face of said optical absorption layer and a face of said optical diffusion layer are optically bonded.

3. A rear projection screen comprising:

   a lenticular lens sheet having a lenticular lens array at one side and a flat face on the other side;
   an optical diffusion layer adjacent to the flat face of said lenticular lens sheet;
   an optical absorption layer adjacent to said optical diffusion layer;
   an optically bonded layer adjacent to said optical absorption layer; and
   an beam transmitting part adjacent to said optically bonded layer having flat faces on both sides;
   whereas a face of said optical absorption layer and a face of said optical transmitting part are optically bonded.

4. A rear projection screen as defined in Claim 2, whereas the thickness of said lenticular lens sheet is almost equivalent to the focal length of a lens of said lenticular lens array, and said lenticular lens sheet and said beam transmitting part are optically bonded with a transparent adhesive between the following faces:

   the flat face of said lenticular lens sheet where said optical absorption layer is formed on a beam non-transmitting area and
   a face of said optical diffusion layer formed on a side of said beam transmitting part.

5. A rear projection screen as defined in Claim 4, wherein a lens pitch of said lenticular lens array is 0.2 mm at the maximum.

6. A rear projection screen as defined in Claim 4, wherein the thickness of said beam transmitting part is between 1 mm and 5 mm.

7. A rear projection screen as defined in Claim 4, wherein a diffusing material is dispersed in said optical diffusion layer for diffusing beam isotropically.

8. A rear projection screen as defined in Claim 4, wherein:

   a lens pitch of said lenticular lens array is 0.2 mm at the maximum;
   the thickness of said beam transmitting part is between 1 mm and 5 mm;
   a diffusing material is dispersed in said optical diffusion layer for diffusing beam isotropically.

9. A rear projection screen as defined in Claim 3, wherein said lenticular lens sheet, having the thickness almost equivalent to the focal length of the lens of said lenticular lens array, and said beam transmitting part are optically bonded using a transparent adhesive between:

   a face of said optical absorption layer on a beam non-transmitting area of the flat face of said lenticular lens sheet and
   a face of said beam transmitting part.

10. A rear projection screen as defined in Claim 9, wherein a lens pitch of said lenticular lens array is 0.2 mm at the maximum.

11. A rear projection screen as defined in Claim 9, wherein the thickness of said beam transmitting part is between 1 mm and 5 mm.

12. A rear projection screen as defined in Claim 9, wherein a diffusing material is dispersed in said optical diffusion layer for diffusing beam isotropically.

13. A rear projection screen as defined in Claim 9, wherein:

   a lens pitch of said lenticular lens array is 0.2 mm at the maximum;
   the thickness of said beam transmitting part is between 1 mm and 5 mm;
   a diffusing material is dispersed in said optical diffusion layer for diffusing beam isotropically.

14. A method for manufacturing a rear projection screen, comprising the steps of:

   forming a lenticular lens sheet by curing an ultraviolet curing resin, said lenticular lens sheet has a lenticular lens on one face and a flat face at the other side, and the thickness of said lenticular lens sheet is almost equivalent to the focal length of said lenticular lens;
   forming an optical absorption layer on a beam non-transmitting area of the flat face of said transparent lenticular lens sheet by the lift-off method using an ultraviolet curing resin; and
   bonding a face having the optical absorption layer of said lenticular lens sheet and a face of the optical diffusion layer of said beam transmitting part using a transparent adhesive.

15. A method for manufacturing a rear projection screen as defined in Claim 14, wherein said transparent adhesive is a transparent acrylic pressure-sensitive adhesive.

16. A method for manufacturing a rear projection screen as defined in Claim 14, wherein said beam transmitting part having the optical diffusion layer is formed by double-layer extrusion.

17. A method for manufacturing a rear projection screen, comprising the steps of:

   forming a lenticular lens sheet by curing an ultraviolet curing resin, said lenticular lens sheet has a lenticular lens on one face and a flat face at the other side, and the thickness of said lenticular lens sheet is almost equivalent to the focal length of said lenticular lens;
   forming an optical diffusion layer on the flat face of said transparent lenticular lens sheet, a diffusing material is dispersed in said optical diffusion layer for diffusing beam isotropically;
   forming an optical absorption layer at a beam non-transmitting area on top of said optical diffusion layer by the lift-off method using an ultraviolet curing resin; and
   bonding a face of the optical absorption layer of said lenticular lens sheet and a face of said beam transmitting part using a transparent adhesive.

18. A method for manufacturing a rear projection screen according to claim 17, wherein said transparent adhesive is a transparent acrylic pressure-sensitive adhesive.

19. A method for manufacturing a rear projection screen as defined in Claim 17, wherein said beam transmitting part having the optical diffusion layer is formed by the double-layer extrusion.

20. A rear projection screen as defined in Claims 1, wherein said lenticular lens array, beam transmitting part, optical absorption layer, optical diffusion layer, and optically bonded layer are made of materials which have nearly the same refraction indices.

21. A rear projection screen as defined in Claims 2, wherein said lenticular lens array, beam transmitting part, optical absorption layer, optical diffusion layer, and optically bonded layer are made of materials which have nearly the same refraction indices.

22. A rear projection screen as defined in Claims 3, wherein said lenticular lens array, beam transmitting part, optical absorption layer, optical diffusion layer, and optically bonded layer are made of materials which have nearly the same refraction indices.

23. A rear projection video display monitor, comprising:

a video display device, and
a rear projection screen comprising:
a lenticular lens sheet having a lenticular lens array at one side and a flat face on the other side;
a beam transmitting part having flat faces on both sides;
an optical absorption layer; an optical diffusion layer; and an optically bonded layer provided between the flat face of said lenticular lens sheet and one face of said beam transmitting part.

24. A rear projection video display monitor, comprising:

a video display device, and
a rear projection screen comprising:
a lenticular lens sheet having a lenticular lens array at one side and a flat face on the other side;
an optical absorption layer adjacent to the flat face of said lenticular lens sheet;
an optically bonded layer adjacent to said optical absorption layer;
an optical diffusion layer adjacent to said optically bonded layer; and
a beam transmitting part adjacent to said optical diffusion layer having flat faces on both sides;
whereas a face of said optical absorption layer and a face of said optical diffusion layer are optically bonded.

25. A rear projection video display monitor, comprising:

a video display device, and

a rear projection screen comprising:
a lenticular lens sheet having a lenticular lens array at one side and a flat face on the other side;
an optical diffusion layer adjacent to the flat face of said lenticular lens sheet;
an optical absorption layer adjacent to said optical diffusion layer;
an optically bonded layer adjacent to said optical absorption layer; and
an beam transmitting part adjacent to said optically bonded layer having flat faces on both sides;
whereas a face of said optical absorption layer and a face of said optical transmitting part are optically bonded.

26. A rear projection video display monitor, comprising:

a liquid crystal panel as an video source, and
a rear projection screen comprising:
a lenticular lens sheet having a lenticular lens array at one side and a flat face on the other side;
a beam transmitting part having flat faces on both sides;
an optical absorption layer; an optical diffusion layer; and an optically bonded layer provided between the flat face of said lenticular lens sheet and one face of said beam transmitting part.

27. A rear projection video display monitor, comprising:

a liquid crystal panel as an video source, and
a rear projection screen comprising in the following order:
a lenticular lens sheet having a lenticular lens array at one side and a flat face on the other side;
an optical absorption layer adjacent to the flat face of said lenticular lens sheet;
an optically bonded layer adjacent to said optical absorption layer;
an optical diffusion layer adjacent to said optically bonded layer; and
a beam transmitting part adjacent to said optical diffusion layer having flat faces on both sides;
whereas a face of said optical absorption layer and a face of said optical diffusion layer are optically bonded.

28. A rear projection video display monitor, comprising:

a liquid crystal panel as an video source, and
a rear projection screen comprising in the following order:

a lenticular lens sheet having a lenticular lens array at one side and a flat face on the other side;

an optical diffusion layer adjacent to the flat face of said lenticular lens sheet;

an optical absorption layer adjacent to said optical diffusion layer;

an optically bonded layer adjacent to said optical absorption layer; and

an beam transmitting part adjacent to said optically bonded layer having flat faces on both sides; whereas a face of said optical absorption layer and a face of said optical transmitting part are optically bonded.

FIG. 1A

FIG. 1B

FIG. 2

34

33

35

FIG. 3

FIG. 4A

FIG. 4B

FIG. 4C

FIG. 4D

FIG. 5A
PRIOR ART

FIG. 5B
PRIOR ART

FIG. 6
PRIOR ART

206

205

FIG. 7
PRIOR ART

EP 0 818 708 A1

Reference numerals for drawings

| | |
|---|---|
| 11, 21 | Beam transmitting part |
| 12, 22 | Transparent pressure-sensitive adhesive |
| 13, 23, 33 | Optical absorption layer |
| 14, 24, 34 | Optical diffusion layer |
| 15, 25, 35 | Lenticular lens sheet |
| 16, 26 | Lenticular lens array |

European Patent
Office

**EUROPEAN SEARCH REPORT**

Application Number

EP 97 11 1852

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN vol. 006, no. 005 (P-097), 13 January 1982 -& JP 56 132325 A (DAINIPPON PRINTING CO LTD), 16 October 1981, Reason for citing: illustrates the lenticular structure of layer 1 (in figure 2). * abstract * | 1,3,23, 25,26,28 | G03B21/62 |
| Y | | 2,4,9, 14,17, 24,27 | |
| Y | US 5 066 099 A (YOSHIDA TAKAHOKO ET AL) 19 November 1991 * column 5, line 16 - column 14, line 7 * * column 16, line 61 - column 17, line 16; figures 3-11 * | 2,4,9, 14,17, 24,27 | |
| A | EP 0 671 653 A (MATSUSHITA ELECTRIC IND CO LTD) 13 September 1995 * page 5, line 25 - page 9, line 4; figures 2,3 * | 1-28 | TECHNICAL FIELDS SEARCHED (Int.Cl.6) G03B G02B |
| A | PATENT ABSTRACTS OF JAPAN vol. 011, no. 091 (P-558), 23 March 1987 & JP 61 241741 A (HITACHI LTD), 28 October 1986, * abstract * | 4,9,14, 17 | |

The present search report has been drawn up for all claims

| Place of search | Date of completion of the search | Examiner |
|---|---|---|
| BERLIN | 14 October 1997 | Manntz, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document